# EUROPÄISCHE PATENTSCHRIFT

(11) **EP 0 816 812 B1**
(45) Veröffentlichungstag und Bekanntmachung des Hinweises auf die Patenterteilung: **06.05.2004**
(21) Anmeldenummer: 97110096.1
(22) Anmeldetag: 20.06.1997
(51) Int. Cl.: G01G 21/30

(54) **Waage**
Weighing scale
Balance

(30) Priorität: 05.07.1996 CH 168596
(43) Veröffentlichungstag der Anmeldung: 07.01.1998
(73) Patentinhaber: Mettler-Toledo GmbH, 8606 Greifensee (CH)
(72) Erfinder: Zumbach, Melchior, Dr., 8604 Volketswil (CH)

(56) Entgegenhaltungen:
- DE-A- 3 412 754
- DE-A- 3 824 636
- DE-A- 4 220 810
- FR-A- 2 505 496
- FR-A- 2 593 286
- US-A- 4 196 784
- US-A- 4 957 177

## Beschreibung

Gegenstand der Erfindung ist eine Waage mit einer Wägezelle, die von einem elastischen, rohrförmigen Balg umfangen und gegen das Eindringen von Staub und Wasser geschützt ist, wobei das eine Ende des Balges am feststehenden und das andere Ende des Balges am auslenkbaren, lastaufnehmenden Ende der Wägezelle befestigt ist.

Waagen werden nicht nur in trockenen, mit wenig Staub belasteten Räumen eingesetzt, sondern auch in Gewerbe- und Fabrikationsanlagen, wie Metzgereien, Schlachthäusern, Chemiebetrieben etc. Insbesondere in Betrieben der Lebensmittelindustrie ist eine häufige Reinigung mit einer gewissen Flüssigkeit (Wasser) sämtlicher Maschinen und Geräte und folglich auch der Waagen vorgeschrieben. Diese Reinigung erfolgt in vielen Fällen mit einem Hochdruckreiniger, an dessen Düsenspitze Drücke von bis zu 150 bar auftreten können.
Es sind daher schon Abdichtungen für Waagen vorgeschlagen worden, die das Eindringen von Spritzwasser in die Messzelle verhindern sollen. Bei einer bekannten Waage (US-A-4,957,177) ist die Wäge- oder Messzelle in einem Faltenbalgrohr aus Metall eingesetzt. Die Enden des Faltenbalgrohres sind zum einen mit dem feststehenden Teil der Wägezelle und zum anderen mit dem kraftaufnehmenden, auslenkbaren Teil verbunden. Dieser bekannte Balg schützt die Wägezelle einwandfrei gegen das Eindringen von Staub und von Flüssigkeiten. Sie setzt aber voraus, dass die Wandstärke des Balges sehr dünn ist, um ihm ein weichelastisches Verhalten zu geben und dadurch den Einfluss, z.B. durch Hysterese, auf das Wägeresultat möglichst gering zu halten. Sehr dünnwandige Faltenbalgrohre aus Stahl lassen sich wirtschaftlich nur in kleinen Durchmessern herstellen. Sie weisen jedoch weitere Nachteile auf. Nach der Montage müssen nämlich zur Vermeidung von Eckenlastfehlern Nacharbeiten an den Lenkern vorgenommen werden. Dies bedeutet, dass die Wägezelle weiter verteuert wird oder aber nur in Waagenkonstruktionen eingesetzt werden kann, bei denen die Eckenlast auf andere Weise kompensiert wird. Im weiteren kommt hinzu, dass die Herstellungskosten für einen Faltenbalg aus Metall, insbesondere wenn dieser aus rostsicherem Material besteht, sehr hoch sind.

Es ist weiter bekannt, anstelle eines aus Metall hergestellten Balges einen Gummibalg zu verwenden. Dieser verfügt über die notwendige Weichelastizität und ist zudem kostengünstig herstellbar. Er weist jedoch den Nachteil auf, dass seine Widerstandskraft gegen den harten Strahl eines Hochdruckreinigungsgerätes äusserst gering und deshalb seine Lebensdauer sehr klein ist. Im weiteren knickt ein aus Gummi hergestellter Balg unter Einwirkung des Wasserstrahles sehr rasch nach innen aus und kann durch die Kanten der Messzelle verletzt werden. Zudem kehrt er u. U. nicht mehr von selbst in die Ausgangslage zurück. Durch diese Einknickung in bistabile Stellungen ändert sich auch die vom Balg ausgehende, das Wägeergebnis beeinflussende Bypass-Kraft.

Aus der DE-C2-42 20 810 ist weiter ein Kraftaufnehmer mit einer balkenförmigen Wägezelle bekannt, die mit einer Dehnungsmessstreifen-Anordnung versehen ist. Zur Schwingungsdämpfung an der Waage sind der feststehende und der auslenkbare Teil der Messzelle mit einem metallenen, rohrförmigen Faltenbalg verbunden, der einen vom einen Ende der Wägezelle abstehenden Stab und ein vom andern Ende der Messzelle abstehendes, den Stab konzentrisch umschliessendes Rohr umgibt. Der Faltenbalg ist mit Öl als Dämpfungsmedium aufgefüllt. Die volumenkonstante Ausbildung des metallenen Faltenbalges bewirkt zusammen mit den ineinanderragenden Teilen (Stab und Rohr) die gewünschte Dämpfung. Der Faltenbalg umschliesst die Messzelle nicht, sondern er liegt innerhalb bzw. zwischen den beiden parallel verlaufenden Lenkern, welche die beiden Enden der Wägezelle verbinden. Die Wägezelle selbst und die darauf aufgebrachten Dehnungsmessstreifen sind folglich gegen äussere Einflüsse nicht geschützt.

Aus der DE-C3-17 74 653 ist weiter eine Abstützung einer Brücke einer elektromechanischen Brückenwaage bekannt, bei der die Messzelle durch zwei elastische Bälge und ein zwischen den beiden Bälgen angeordnetes metallenes Rohrstück gegen Eindringen von Feuchtigkeit und Schmutz geschützt ist. Massnahmen gegen das Einknicken der nicht näher bezeichneten Bälge sind keine getroffen. Eine Reinigung dieser Messzelle mit einem Hochdruck-Reinigungsgerät wird bei einer Brückenwaage kaum durchgeführt.

Die Aufgabe der vorliegenden Erfindung besteht nun darin, eine Waage zu schaffen, bei der die Messzelle durch einen kostengünstig herstellbaren, weichelastischen Faltenbalg geschützt wird, ohne dass die Wirkung des Faltenbalges durch Hochdruckreinigung beeinträchtigt wird.

Gelöst wird diese Augabe durch eine Waage mit einer Wägezelle, die von einem elastischen, rohrförmigen Balg umfangen und gegen das Eindringen von Staub und Wasser geschützt ist, wobei das eine Ende des Balges am feststehenden und das andere Ende des Balges am auslenkbaren, lastaufnehmenden Ende der Wägezelle befestigt ist, wobei im Innern des Balges mindestens ein die Wägezelle umschliessendes, biegesteifes Stützrohr eingesetzt ist, das sich im Wesentlichen über die axiale Länge des Balges erstreckt.

Ein in geringem Abstand zum Innendurchmesser des Faltenbalges liegendes Stützmittel, z.B. ein Stützrohr oder ein Gitterrohr, bleibt wägetechnisch ohne Einfluss auf das Wägeresultat, es stützt aber den vorzugsweise aus Gummi oder dgl. hergestellten dünnwandigen Balg beim Auftreffen von Reinigungsflüssigkeit aus einem Hochdruck-Reinigungsgerät und verhindert das Einknicken des Balges. Es schützt aber auch zusätzlich den Balg vor Beschädigung, da eine Überdehnung desselben wegen der Auflage auf dem Stützrohr ausgeschlossen ist.

Das Stützrohr ist nur an einem der beiden Enden der Wägezelle befestigt und hat folglich keinen Einfluss auf das Wägeresultat. Es lässt sich leicht an der Wägezelle oder an die Enden der Wägezelle umgebenden, becherförmigen Kappen befestigen. Die becherförmigen Kappen sind mit Befestigungsmitteln an den Enden der Wägezelle befestigt und tragen an ihrem, dem Zentrum der Wägezelle zugekehrten Ende je ein Balgende. Dieses kann mit bekannten Mitteln, wie Briden, Reifen oder dgl., mit dem Becherende verbunden werden.

Im Innern des Gummibalges angebrachte und als Teil des Balges ausgebildete radial nach innen abstehende Wülste oder Rippen geben dem Gummibalg eine erhöhte radiale Festigkeit gegen äussere Kräfte.

Anhand eines illustrierten Ausführungsbeispieles wird die Erfindung näher erläutert. Es zeigen:
- Figur 1: einen vertikalen Längsschnitt durch eine Messzelle,
- Figur 2: einen horizontalen Längsschnitt durch eine Messzelle,
- Figur 3: einen Querschnitt durch die Messzelle in Figur 1 längs Linie III-III,
- Figur 4: einen Teilquerschnitt durch den Balg und
- Figur 5: eine perspektivische Darstellung eines Stützrohres.

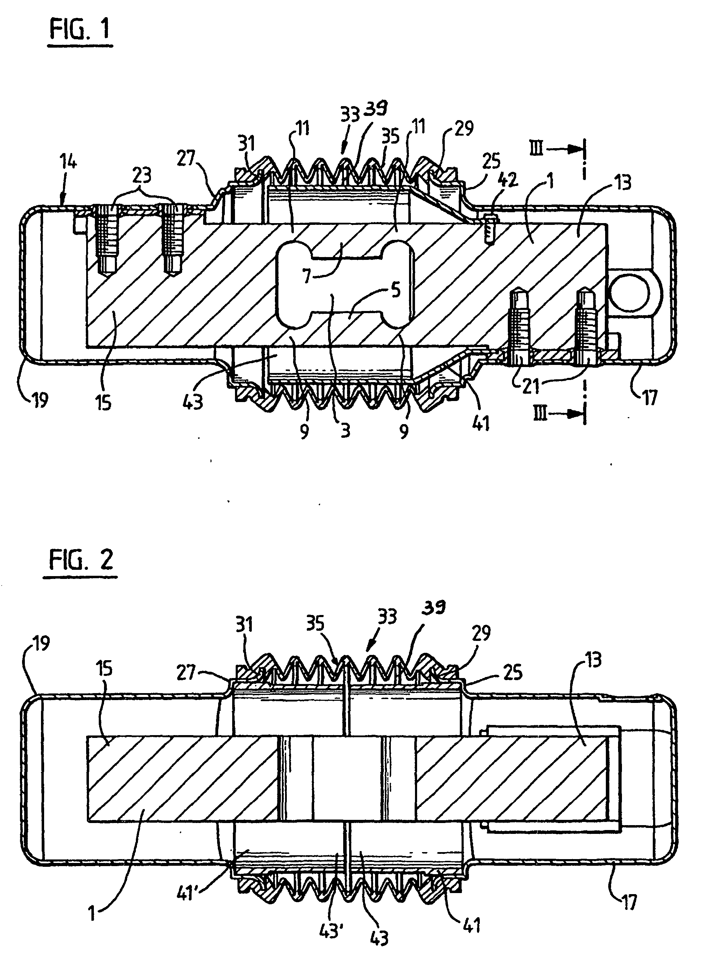

In Figur 1 ist mit Bezugszeichen 1 eine Messzelle bekannter Bauart dargestellt, wie sie auch in den in der Beschreibungseinleitung genannten Dokumenten offenbart ist. Die Messzelle 1 besteht aus einem Metallblock, der im Zentrum eine Ausnehmung 3 aufweist, durch deren geometrische Ausbildung ein unterer Lenker 5 und ein oberer Lenker 7 entsteht, welche Lenker 5,7 durch je zwei Biegestellen 9 und 11 mit dem feststehenden Ende 13 bzw. mit dem beweglichen, lastaufnehmenden Ende 15 verbunden sind. Der besseren Übersichtlichkeit halber ist weder das Waagengestell, an dem der feststehende Teil 13 befestigt ist, noch der Lastaufnehmer mit der Waagschale, welcher auf dem lastaufnehmenden Ende aufgesetzt ist, dargestellt.

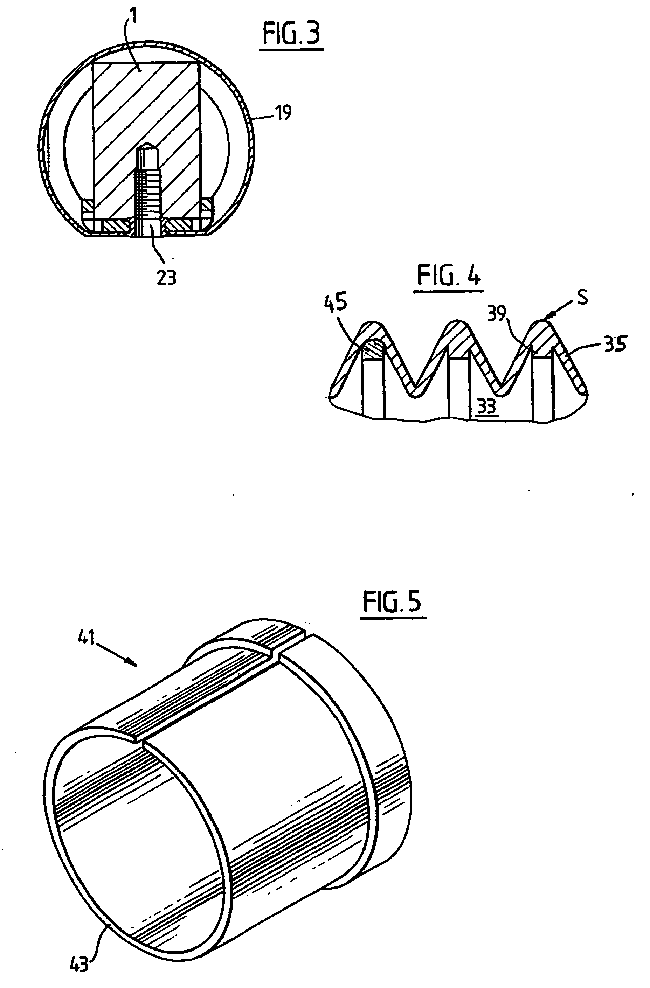

Die Messzelle 1 ist vollständig von einer Staub- und Spritzwasserhülle 14 umschlossen. Diese umfasst zwei Becher 17 und 19, welche das lastseitige Ende 15 bzw. das feststehende Ende 13 umgeben und mit diesem durch Befestigungsmittel, wie z.B. Schrauben, verbunden sind (s. auch Figur 3). In den Figuren 1 und 3 sind nur die Schraubenlöcher 21, 23 dargestellt. Die beiden Becher 17 und 19 sind vorzugsweise aus rostsicherem Stahl durch Tiefziehen hergestellt und weisen an sich gegenüberliegenden, gegen die Mitte der Messzelle 1 gerichteten Enden einen aufgeweiteten Rand 25 bzw. 27 auf. Die beiden aufgeweiteten Ränder 25, 27 tragen je einen ringförmigen Flansch 29, 31, der dazu ausgebildet ist, das Ende eines weichelastischen, dünnwandigen Gummibalges - im Ausführungsbeispiel ein Faltenbalg 33 - zu tragen. Die beiden Enden des Gummibalges 33 weisen eine wesentlich höhere Wandstärke auf als die dazwischen gelegenen Wände 35, um eine einwandfreie, umlaufende Abdichtung zwischen dem Balg 33 und den Flanschen 29, 31 zu gewährleisten. Die Befestigung des Balges 33 an den Bechern 17,19 erfolgt durch in den Figuren nicht dargestellte Briden; selbstverständlich könnte auch eine Verklebung vorliegen.

An den peripheren Scheiteln S der Wände 35 des Faltenbalges 33 können zur radialen Versteifung an deren Innenseite umlaufende, nach innen gerichtete Stege 39 angeformt sein. Alternativ könnten auch Ringe 45 aus Kunststoff oder Metall eingelegt sein (Figur 4). Am feststehenden Teil 13 der Messzelle 1 ist ein Stützrohr 41, z.B. durch eine Schraube 42 oder ein anderes geeignetes Befestigungsmittel, aufgesetzt, das sich über die axiale Länge des Faltenbalges 33 erstreckt. Zwischen der Rohraussenseite und den innenliegenden Scheiteln der Wände 35 des Faltenbalges 33 liegt ein sehr geringer Abstand vor. Das Ende 43 des fliegend befestigten Stützrohres 41 ist nicht abgestützt; eine Beeinträchtigung der Messzelle 1 bzw. des lastaufnehmenden Teiles 15 ist dadurch ausgeschlossen (Figur 1).

Das Stützrohr 41 kann selbstverständlich auch am lastaufnehmenden Teil 15 der Messzelle 1 oder an einem der beiden Becher 17 oder 19 befestigt oder monolithisch in diesem integriert sein.

In der Figur 2 sind zwei Stützrohre 41,41' je an den Bechern 17 und 19 befestigt, deren Enden 43,43' (s. auch Figur 5) in einem Abstand einander gegenüberliegen und die freie Bewegung der Messzelle 1 nicht beeinträchtigen. Die beiden Stützrohre 41,41' könnten auch unterschiedliche Durchmesser aufweisen und deren Enden 43,43' sich konzentrisch überlappen.

In den Figuren sind die Stützrohre 41,41' als nichtdurchbrochene Rohre dargestellt. Alternativ könnten Stützrohre auch aus gelochtem oder geschlitztem Blech oder aus Blech in Gitterstruktur gefertigt sein.

Die Querschnitte des Stützrohres 41,41', der Becher 17,19 und des Balges 33 können rund oder mehreckig ausgebildet sein.

Die flüssigkeitsdichte Verbindung zwischen den beiden Bechern 17,19 wurde in der Beschreibung stets als Balg bzw. Faltenbalg bezeichnet. Selbstverständlich könnte in einer vereinfachten Ausführung ein biegeelastischer Schlauch den Balg ersetzen.

## Patentansprüche

1. Waage, mit einer Wägezelle (1), die von einem elastischen, rohrförmigen Balg (33) umfangen und gegen das Eindringen von Staub und Wasser geschützt ist, wobei das eine Ende des Balges (33) am feststehenden (13) und das andere Ende des Balges (33) am auslenkbaren, lastaufnehmenden Ende (15) der Wägezelle (1) befestigt ist, **dadurch gekennzeichnet, dass** im Innern des Balges (33) mindestens ein die Wägezelle (1) umschliessendes, biegesteifes, sich im wesentlichen über die axiale Länge des Balges (33) erstreckendes Stützrohr (41) eingesetzt ist.

2. Waage nach Anspruch 1, **dadurch gekennzeichnet, dass** die beiden Enden (13,15) der Wägezelle (1) von Bechern (17,19) umfasst werden und der Balg (33) an den Bechern (17,19) befestigt ist.

3. Waage nach einem der Ansprüche 1 oder 2, **dadurch gekennzeichnet, dass** das Stützrohr (41) an einem der beiden Enden (13,15) der Wägezelle (1) oder an einem der beiden Becher (17,19) befestigt ist.

4. Waage nach einem der Ansprüche 1 oder 2, **dadurch gekennzeichnet, dass** an jedem Ende (13,15) der Wägezelle (1) oder an beiden Bechern (17,19) je ein Stützrohr (41,41') befestigt ist.

5. Waage nach einem der Ansprüche 1 bis 4, **dadurch gekennzeichnet, dass** wenigstens ein Stützrohr (41,41') monolithisch in einem der Becher (17,19) integriert ist.

6. Waage nach einem der Ansprüche 1 bis 5, **dadurch gekennzeichnet, dass** der Balg (33) als biegeelastischer Schlauch ausgebildet ist.

7. Waage nach einem der Ansprüche 1 bis 5, **dadurch gekennzeichnet, dass** der Balg (33) als Faltenbalg ausgebildet ist und die äussere Mantelfläche des Stützrohres (41) in einem Abstand zu den innenliegenden Scheiteln des Faltenbalges (33) liegt.

8. Waage nach Anspruch 7, **dadurch gekennzeichnet, dass** auf der Innenseite der äusseren Scheitel (S) des Faltenbalges (33) radial nach innen gerichtete, umlaufende Stege (39) ausgebildet sind.

9. Waage nach Anspruch 7, **dadurch gekennzeichnet, dass** auf der Innenseite der äusseren Scheitel (S) des Faltenbalges (33) Kunststoff- oder Metallringe (45) eingelegt sind.

10. Waage nach einem der Ansprüche 2 bis 9, **dadurch gekennzeichnet, dass** der Balg (33), die Becher (17, 19) und das mindestens eine Stützrohr (41) einen runden oder einen mehreckigen Querschnitt aufweisen.

11. Waage nach einem der Ansprüche 1 bis 10 **dadurch gekennzeichnet, dass** das Stützrohr (41, 41') aus gelochtem oder geschlitztem Blech oder aus Blech in Gitterstruktur gefertigt ist.

## Claims

1. A scale with a load cell (1) that is encompassed by an elastic tubular bellows (33) and protected from the admission of dust and water, wherein one end of the bellows (33) is fixed on the stationary end (13) of the load cell (1) and the other end of the bellows (33) is fixed on the movable weight-carrying end (15) of the load cell, **characterized in that** at least one deflection resistant support tube (41) that essentially extends over the axial length of the bellows (33) and encompasses the load cell (1) is inserted into the interior of the bellows (33).

2. The scale according to Claim 1, **characterized in that** the two ends (13, 15) of the load cell (1) are encompassed by cups (17, 19), and **in that** the bellows (33) is fixed on the cups (17, 19).

3. The scale according to Claim 1 or 2, **characterized in that** the support tube (41) is fixed on one of the two ends (13, 15) of the load cell (1) or on one of the two cups (17, 19).

4. The scale according to Claim 1 or 2, **characterized in that** one respective support tube (41, 41') is fixed on each end (13, 15) of the load cell (1) or on both cups (17, 19).

5. The scale according to one of Claims 1 to 4, **characterized in that** at least one support tube (41, 41') is monolithically integrated into one of the cups (17, 19).

6. The scale according to one of Claims 1 to 5, **characterized in that** the bellows (33) is realized in the form of a pliable elastic hose.

7. The scale according to one of Claims 1 to 5, **characterized in that** the bellows (33) is realized in the form of a folding bellows, and **in that** the outer surface of the support tube (41) is spaced apart from the inner vertexes of the folding bellows (33).

8. The scale according to Claim 7, **characterized in that** peripheral webs (39) are arranged on the inner side of the outer vertexes (S) of the folding bellows (33) and directed radially inward.

9. The scale according to Claim 7, **characterized in that** plastic or metal rings (45) are inserted on the inner side of the outer vertexes (S) of the folding bellows (33).

10. The scale according to one of Claims 2 to 9, **characterized in that** the bellows (33), the cups (17, 19) and the at least one support tube (41) have a round or polygonal cross section.

11. The scale according to one of Claims 1 to 10, **characterized in that** the support tube (41, 41') consists of perforated or slotted sheet metal or of sheet metal having a grid structure.

## Revendications

1. Balance, avec une cellule de pesage (1), entourée par un soufflet (33) élastique tubulaire et protégée contre l'infiltration de poussière et d'eau, l'une des extrémités du soufflet (33) étant fixée à l'extrémité fixe (13) et l'autre extrémité du soufflet (33) étant fixée à l'extrémité pivotante, captant la charge (15) de la cellule de pesage (1), **caractérisée en ce qu'**au moins un tube de soutien résistant à la flexion (41) entourant la cellule de pesage et s'étendant sensiblement sur la longueur axiale du soufflet (33), est intégré à l'intérieur du soufflet (33) .

2. Balance selon la revendication 1, **caractérisée en ce que** les deux extrémités (13, 15) de la cellule de pesage (1) sont entourées de timbales (17, 19) et **en ce que** le soufflet (33) est fixé sur les timbales (17, 19).

3. Balance selon l'une quelconque des revendications 1 ou 2, **caractérisée en ce que** le tube de soutien (41) est fixé à l'une des deux extrémités (13, 15) de la cellule de pesage (1) ou sur l'une des deux timbales (17, 19).

4. Balance selon l'une quelconque des revendications 1 ou 2, **caractérisée en ce qu'**un tube de soutien (41,41') est fixé sur chaque extrémité (13, 15) de la cellule de pesage (1) ou sur les deux timbales (17, 19).

5. Balance selon l'une quelconque des revendications 1 à 4, **caractérisée en ce qu'**au moins un tube de soutien (41, 41') est intégré de façon monolithique dans l'une des timbales (17, 19).

6. Balance selon l'une quelconque des revendications 1 à 5, **caractérisée en ce que** le soufflet (33) est conçu sous forme d'un tuyau souple et élastique.

7. Balance selon l'une quelconque des revendications 1 à 5, **caractérisée en ce que** le soufflet (33) est conçu sous forme d'un soufflet d'intercirculation et **en ce que** la surface extérieure du tube de soutien (41) est située à une certaine distance par rapport aux sommets intérieurs du soufflet d'intercirculation (33).

8. Balance selon la revendication 7, **caractérisée en ce que** sur le côté interne des sommets externes (S) du soufflet d'intercirculation (33) sont conçues des barrettes périphériques (39), dirigées vers l'intérieur de façon radiale.

9. Balance selon la revendication 7, **caractérisée en ce que** sur le côté interne des sommets (S) externes du soufflet d'intercirculation (33) sont insérées des bagues (45) en matière plastique ou en métal.

10. Balance selon l'une quelconque des revendications 2 à 9, **caractérisée en ce que** le soufflet (33), les timbales (17, 19) et au moins un tube de soutien (41) présentent une section transversale arrondie ou polygonale.

11. Balance selon l'une quelconque des revendications 1 à 10, **caractérisée en ce que** le tube de soutien (41, 41') est fabriqué en tôle perforée ou fendue ou en tôle de structure réticulaire.
